Europäisches Patentamt

European Patent Office

Office européen des brevets

(19)

(11) Veröffentlichungsnummer: **0 122 418**
**B1**

(12) # EUROPÄISCHE PATENTSCHRIFT

(45) Veröffentlichungstag der Patentschrift:
22.06.88

(51) Int. Cl.⁴: **G 01 S 1/40**

(21) Anmeldenummer: **84102219.7**

(22) Anmeldetag: **02.03.84**

(54) **Doppler-Drehfunkfeuer.**

(30) Priorität: **18.03.83 DE 3309784**

(43) Veröffentlichungstag der Anmeldung:
**24.10.84 Patentblatt 84/43**

(45) Bekanntmachung des Hinweises auf die Patenterteilung:
**22.06.88 Patentblatt 88/25**

(84) Benannte Vertragsstaaten:
**DE FR GB IT**

(56) Entgegenhaltungen:
**EP - A - 0 044 456**
**DE - A - 2 557 227**

**FREQUENZ, Band 37, Nr. 10, 1983 W. KAUTZ "Speisung und Entkopplung von Strahlerelementen bei DVOR-Navigationsanlagen", Seite 262-267**
**E. Kramar "Funksysteme für Ortung und Navigation", Verlag Berliner Union GmbH, Stuttgart 1973 Seiten 139-145**

(73) Patentinhaber: **ALCATEL N.V.,
Strawinskylaan 537 (World Trade Center), NL-1077 XX Amsterdam (NL)**
(84) Benannte Vertragsstaaten: **FR GB IT**

(73) Patentinhaber: **Standard Elektrik Lorenz Aktiengesellschaft, Hellmuth-Hirth-Strasse 42, D-7000 Stuttgart 40 (DE)**
(84) Benannte Vertragsstaaten: **DE**

(72) Erfinder: **Kautz, Werner, Engelbergstrasse 1, D-7015 Korntal 1 (DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung geht aus von einem Doppler-Drehfunkfeuer wie im Oberbegriff des Patentanspruchs angegeben.

Doppler-Drehfunkfeuer sind aus dem Buch von E. Kramar «Funksysteme für Ortung und Navigation», Verlag Berliner Union GmbH, Stuttgart 1973, Seiten 139–145 bekannt. In der der europäischen Anmeldung EP-A 0044 456 entsprechenden DE-OS 30 27 451 ist eine Antennenanordnung für ein solches Doppler-Drehfunkfeuer beschrieben. Diese Antennenanordnung ist so ausgebildet, daß einander benachbarte Antennen möglichst gut entkoppelt sind. Hierzu sind in die Leitungen zwischen dem bei einem Doppler-Drehfunkfeuer vorhandenen Antennenschaltgerät und den auf einem Kreis angeordneten Antennen reziproke Leistungsteiler eingefügt, und jeweils benachbarte Leistungsteiler sind über HF-Leitungen miteinander verbunden. Bei der dort beschriebenen Lösung ist es zu einer guten Entkopplung notwendig, daß von der Antenne ausgehend über den Leistungsteiler und das Antennenschaltgerät zum Sender hin eine Fehlanpassung vorhanden ist.

Bei einem Zweiseitenband-Doppler-Drehfunkfeuer müssen gleichzeitig zwei auf dem Kreis einander gegenüberliegende Antennen wirksam geschaltet werden. Die eine davon strahlt das obere, die andere das untere Seitenband der Trägerschwingung ab. Um eine möglichst gleichmäßige Rotation einer wirksam geschalteten Antenne zu simulieren, werden im allgemeinen gleichzeitig nicht nur zwei einander gegenüberliegende Antennen sondern zwei einander gegenüberliegende Antennenpaare wirksam geschaltet (oder gegebenenfalls auch Gruppen mit noch mehr Antennen). Die den benachbarten Antennen zugeführten Signale werden in bekannter Weise so intensitätsmoduliert, daß die simulierte Antennenbewegung möglichst gleichmäßig ist.

Es hat sich gezeigt, daß man bei einem Zweiseitenband Doppler-Drehfunkfeuer mit der aus der zitierten DE-OS bekannten Antenne zwar das gewünschte Runddiagramm erhält, daß jedoch bei dem im Funkfeld vorhandenen und zur Navigation verwendeten Signal eine unerwünschte Amplitudenmodulation, deren Frequenz gleich der doppelten Umlauffrequenz für ein Antennenpaar ist, auftritt.

Aufgabe der Erfindung ist es, ein Doppler-Drehfunkfeuer anzugeben, bei dem die Störmodulation möglichst gering ist. Bei dem erfindungsgemäßen Doppler-Drehfunkfeuer gemäß Patentanspruch liegt die Störmodulation weit unterhalb des zugelassenen Grenzwertes. Durch eine geeignete Dimensionierung der Leistungsteiler sind nicht nur die benachbarten sondern auch die weiter entfernten Antennen gut voneinander entkoppelt. Dies gilt auch für die bei einem Doppler-Drehfunkfeuer notwendige Mittelantenne.

Die Erfindung wird anhand der Zeichnungen beispielsweise näher erläutert. Es zeigt:

Fig. 1 eine Skizze zur Erläuterung der Entstehung der Störmodulation,

Fig. 2 ein Blockschaltbild eines Teils des neuen Doppler-Drehfunkfeuers,

Fig. 3 ein Blockschaltbild eines Leistungsteilers.

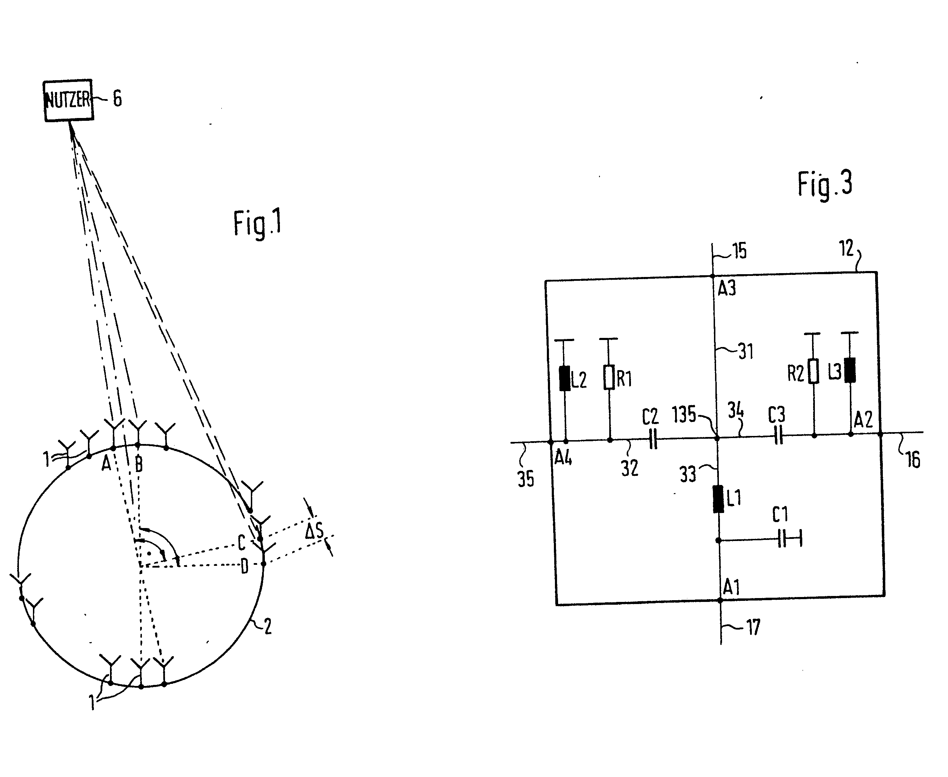

In der Skizze der Fig. 1 sind mehrere auf einem Kreis 2 angeordnete Antennen 1 dargestellt. Zu einem bestimmten Zeitpunkt sind (wie bei Zweiseitenband Doppler-Drehfunkfeuern üblich) stets zwei auf dem Kreis einander gegenüberliegende Antennenpaare wirksam geschaltet.

In der Beschreibung wird auch dann von zwei wirksam geschalteten Antennen geredet, wenn, bedingt durch die Intensitätsmodulation, die eine Antenne eines Paares mit maximaler Intensität und die andere Antenne mit der «Intensität Null» gespeist wird.

Die Signale, die von den rundstrahlenden Antennen A, B abgestrahlt werden, haben zu einem Nutzer 6, der senkrecht auf den Kreis 2 blickt, jeweils gleiche Signallaufzeiten. Somit überlagern sich die Strahlungsdiagramme der Antennen eines Paares in Richtung Nutzer 6 gleichphasig. Anders hingegen, wenn zur Simulation des Einzelantennenumlaufs die Einzelantennen C, D, die gegenüber den zuvor wirksam geschalteten Einzelantennen A, B auf dem Kreis 2 um 90° verschoben sind, wirksam geschaltet sind. Die von den Einzelantennen C, D abgestrahlten Signale haben zu dem Nutzer 6 unterschiedliche Laufzeiten (Unterschied Δs), was zur Folge hat, daß die Strahlungsdiagramme der Antennen C und D mit unterschiedlicher Phase einander überlagert werden. Bedingt durch die unterschiedliche Diagrammüberlagerung hat das vom Nutzer empfangene Signal unterschiedliche Amplituden, und zwar abhängig davon, ob es vom Antennenpaar A, B oder Antennenpaar C, D abgestrahlt wurde. Entsprechendes gilt für die diesen Antennenpaaren gegenüberliegenden Antennenpaare. Folglich ist das vom Nutzer empfangene Signal amplitudenmoduliert, und zwar mit der doppelten Umlauffrequenz der Antenne.

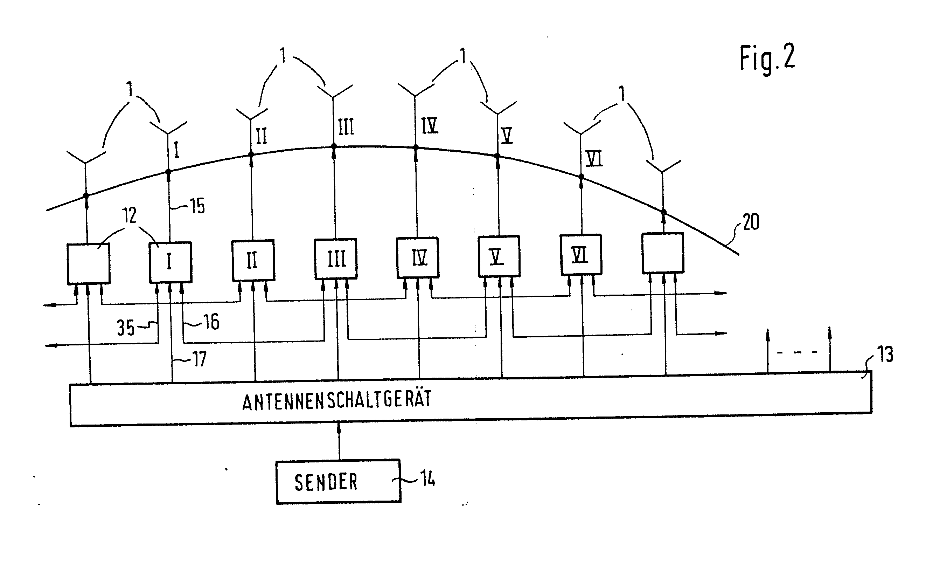

Bei dem neuen Doppler-Drehfunkfeuer, das anhand der Fig. 2 näher erläutert wird, ist diese Amplitudenmodulation zumindest stark reduziert.

In der Fig. 2 sind nur die zum Verständnis der Erfindung notwendigen Teile dargestellt. Insbesondere wird auf die Erzeugung der Träger- und Seitenbandsignale sowie die Intensitätsmodulation der Seitenbandsignale nicht näher eingegangen.

Ein Zweiseitenband-Doppler-Drehfunkfeuer weist auf dem Kreis stets eine geradzahlige Anzahl von Antennen auf. Numeriert man diese durch, dann lassen sich die Antennen in eine Gruppe mit geradzahligen und eine Gruppe mit ungeradzahligen Ordnungszahlen aufteilen.

Sechs der auf dem Kreisausschnitt 20 angeordneten Antennen 1 sind mit römischen Zahlen I bis VI durchnumeriert. Die übrigen Antennen des Doppler-Drehfunkfeuers sind nicht weiter gekennzeichnet oder nicht dargestellt. Die sechs Antennen sind jeweils über einen reziproken Leistungsteiler 12 mit einem Antennenschaltgerät 13 verbunden. Das Antennenschaltgerät steuert in an sich bekannter Weise das Wirksamschalten der Antennen. Das Antennenschaltgerät 13 ist mit einem Sender 14 verbunden.

Die reziproken Leistungsteiler 12 weisen jeweils vier Anschlüsse auf, von denen einer über eine HF-Leitung 15 mit einer Einzelantenne I und einer über eine HF-Leitung 17 mit dem Antennenschaltgerät verbunden ist. Die beiden verbleibenden Anschlüsse sind mit den reziproken Leistungsteilern der beidseitig übernächsten reziproken Leistungsteiler III über gleichartige HF-Leitungen 35, 16 verbunden, d.h. ein Leistungsteiler, der einer geradzahligen Antenne II, IV, VI zugeordnet ist, ist jeweils mit den Leistungsteilern II, IV, VI, die Antennen mit der nächst grösseren bzw. nächst kleineren geradzahligen Ordnungszahl zugeordnet sind, verbunden. Entsprechendes gilt für die ungeradzahligen Leistungsteiler und Antennen.

Es wurde oben bereits erwähnt, daß man durch geeignete Dimensionierung der reziproken Leistungsteiler direkt benachbarte Antennen möglichst gut entkoppelt. Zu einer nahezu vollkommenen Entkoppelung ist es jedoch (wie in der DE-OS 30 27 451 angegeben) notwendig, über HF-Leitungen einen Teil der Sendeleistung von der mittleren Antenne zu der linken und rechten Antenne auszukoppeln. Ausgehend von den Längen der nicht vorhandenen HF-Leitungen zwischen benachbarten Leistungsteilern, die zur optimalen Entkopplung benachbarter Antennen notwendig wären, wählt man die Längen der HF-Leitungen zwischen einem Leistungsteiler und den beiden übernächsten Leistungsteilern. Diese Länge ist gleich der (nicht vorhandenen) HF-Leitung, die zur optimalen Entkopplung notwendig wäre, plus einem ganzzahligen Vielfachen von $2\pi$ (bedingt durch mechanische Länge) plus einer zusätzlichen Phasenverschiebung $\pi/4$.

Ein Sendesignal wird also nicht nur von einer Antenne 1, z.B. der ungeradzahligen III, abgestrahlt, sondern außerdem (mit kleinerer Leistung) auch von den benachbarten ungeradzahligen Antennen I und V. Weiterhin wirken die dazwischenliegenden geradzahligen Antennen II und IV wegen der nicht optimalen Entkopplung zu der direkt gespeisten Antenne III als Parasitärstrahler. Das Signal wird also von einer Antennengruppe, die von den Antennen I bis V gebildet wird, abgestrahlt.

Außer der ungeradzahligen Antenne III ist gleichzeitig auch die ihr benachbarte geradzahlige Antenne IV wirksam geschaltet. Das für die Antenne III gesagte gilt für die Antenne IV sinngemäß. Die Signalabstrahlung erfolgt also wiederum durch eine Antennengruppe; in diesem Fall gebildet durch die Antennen II bis VI.

Entsprechendes gilt für das Antennenpaar, das diesem Antennenpaar III, IV auf der anderen Seite des Kreises gegenüberliegt.

Die Strahlungsdiagramme der beiden Antennengruppen haben jeweils einen angenähert elliptischen Verlauf, wobei die Hauptachsen der Ellipsen tangential am Kreis anliegen. Der Betrag der Energie, der zu den jeweils übernächsten Antennen gelangt, und die Länge der HF-Leitungen (und somit die dadurch erzeugte Phasenverschiebung), sind so gewählt, daß das durch Überlagerung der beiden Ellipsen erzeugte Strahlungsdiagramm für einen Nutzer unabhängig von seiner Position und unabhängig von der Position eines Antennenpaares auf dem Kreis möglichst gut einem kreisförmigen Strahlungsdiagramm angenähert ist. Betrachtet man die Überlagerung von einem Nutzer (Fig. 1; 6) aus senkrecht zum Kreis, dann überlagern sich die beiden Strahlungsdiagramme gleichphasig; in anderen Richtungen weisen die Strahlungsdiagramme aufgrund unterschiedlicher Laufzeiten Phasendifferenzen zueinander auf.

Anhand der Fig. 3 wird nachfolgend ein Leistungsteiler näher erläutert. Leitungen 31, 32, 33, 34 führen von Anschlüssen zu einem Sternpunkt 135 im Leistungsteiler 12. In die Leitungen 32 und 34, die mit den Anschlüssen A4 und A2 verbunden sind, sind Kondensatoren C2 und C3 eingefügt. Durch ihre Dimensionierung wird das Teilungsverhältnis des Leistungsteilers festgelegt.

Widerstände R1 zwischen Leitung 32 und Masse und R2 zwischen Leitung 34 und Masse sowie Induktivitäten L1 in der Leitung 33, L2 zwischen Leitung 32 und Masse, L3 zwischen Leitung 34 und Masse und eine Kapazität C1 zwischen Leitung 33 und Masse dienen zur Widerstandsanpassung der Anschlüsse.

Der Ausgangswiderstand des Senders ist 50 Ohm.

C2 und C3 haben 27 pF; R1 und R2 haben 50 Ohm. L1 und C1 sind so gewählt, daß der Sternpunkt 135 vom Sender aus gesehen einen Widerstand von 50 Ohm und von der Antenne aus gesehen einen Widerstand von etwa 15 Ohm hat. L2 und L3 haben jeweils 0,1 µH.

Es ist wichtig, daß von der Antenne aus gesehen eine Fehlanpassung zum Sender vorhanden ist, d.h. der Anschluß A3 des Leistungsteilers, der mit der Antenne C verbunden ist, ist nicht an die Antenne angepaßt. Durch diese Fehlanpassung erfolgt nur eine kleine Sekundäranregung der Antenne, wodurch man eine Entkopplung zwischen benachbarten Antennen erreicht.

**Patentanspruch**

Zweiseitenband-Doppler-Drehfunkfeuer mit
- einer Sendereinrichtung (14) zur Erzeugung der erforderlichen Träger- und Seitenbandsignale,
- einer Antennenanordnung, welche eine zentrale Antenne sowie mehrere Rundstrahlantennen (1) aufweist, die in gleichem Abstand voneinander auf einem Kreis (2) um die zentrale Antenne angeordnet sind,
- einem Antennenschaltgerät (13), über das entlang des Kreisumfangs aufeinanderfolgende Antennengruppen aus jeweils einer Rundstrahlantenne und mindestens einer dieser benachbarten Rundstrahlantenne zusammen mit auf dem Kreis diametral gegenüberliegenden entsprechenden Antennengruppen derart der Reihe nach an die Sendereinrichtung angeschlossen werden, daß eine kontinuierliche Rotation zweier sich gegenüberliegender Rundstrahlantennen um die zentrale Antenne simuliert wird,
- jeweils einem reziproken Leistungsteiler (12) für jede Rundstrahlantenne, der jeweils einen ersten mit dem Antennenschaltgerät verbundenen Anschluß (A1), einen mit dem ersten Anschluß in Verbindung stehenden zweiten Anschluß (A3), der mit der zugehörigen Rundstrahlantenne verbunden ist, sowie zwei weitere Anschlüsse (A2, A4) aufweist, die jeweils sowohl mit dem ersten als auch mit dem zweiten Anschluß des betreffenden Leistungsteilers über in diesem enthaltene Koppelschaltungen (R1, L2, C2; R2, L3, C3) mit vorgegebenem Koppelverhältnis verbunden sind und von denen jeder mittels einer HF-Leitung (16, 35) jeweils an einen der entsprechenden beiden weiteren Anschlüsse des Leistungsteilers einer jeweils anderen Rundstrahlantenne angeschlossen ist,

dadurch gekennzeichnet, daß

– die beiden weiteren Anschlüsse (A2, A4) eines jeden Leistungsteilers (12) an jeweils einen der beiden weiteren Anschlüsse derjenigen beiden Leistungsteiler angeschlossen sind, die den jeweils übernächsten Rundstrahlantennen beidseits der Rundstrahlantenne des jeweils betrachteten Leistungsteilers zugeordnet sind, und

– die Koppelschaltungen der Leistungsteiler so ausgelegt und die Längen der die Leistungsteiler untereinander verbindenden HF-Leitungen so gewählt sind, daß jede jeweils an die Sendereinrichtung angeschaltete Rundstrahlantenne einer Antennengruppe zusammen mit den jeweils beiden beidseitig dieser Rundstrahlantenne angeordneten Rundstrahlantennen ein Strahlungsdiagramm von angenähert elliptischer Form ergibt und die Überlagerung aller Strahlungsdiagramme einer Antennengruppe am Ort eines Nutzers (6) unabhängig von dessen relativer Richtung zur Antennenanordnung in einem etwa kreisförmigen Strahlungsdiagramm resultiert.

## Claim

A double-sideband Doppler very high frequency omnidirectional range comprising

– a transmitter (14) for generating the necessary carrier and sideband signals,

– an antenna array comprising a central antenna and a plurality of omnidirectional antennas arranged equidistantly from each other in a circle (2) round the central antenna,

– an antenne switching device (13) via which, along the circumference of the circle, successive antenna groups each consisting of one omnidirectional antenna and at least one omnidirectional antenna adjacent thereto together with corresponding antenna groups situated diametrically opposite on the circle are connected in turn to the transmitter in such a way that a continuous rotation, round the central antenna, of two omnidirectional antennas situated opposite each other is simulated,

– a reciprocal power divider (12) for each omnidirectional antenna, comprising in each case a first terminal (A1) connected to the antenna switching device, a second terminal (A3) joined to the first terminal which is connected to the associated omnidirectional antenna and two further terminals (A2, A4) which are each connected to both the first and the second terminal of the power divider in question via coupling circuits (R1, L2, C3; R2, L3, C3) contained therein with a prescribed coupling ratio and which is connected by an RF line (16, 35) in each case to one of the two corresponding further terminals of the power divider of a different omnidirectional antenna,

characterized in that

– the two further terminals (A2, A4) of each power divider (12) are each connected to one of the two further terminals of those two power dividers which are assigned to the next-but-one omnidirectional antennas on each side of the omnidirectional antenna of the power divider in question, and

– the coupling circuits of the power dividers are so designed and the lengths of the RF lines interconnecting the power dividers are so chosen that every omnidirectional antenna of one antenna group connected at one time to the transmitter, together with the two omnidirectional antennas arranged on both sides of this omnidirectional antenna, produces a radiation pattern of approximately elliptical shape and that for a user (6) the superimposition of all the radiation patterns of an antenna group results, irrespective of the direction of the user's location in relation to the antenna array, in an approximately circular radiation pattern.

## Revendication

Balise Doppler à deux bandes latérales comprenant:

– un émetteur (14) pour produire les signaux d'onde porteuse et de bandes latérales nécessaires,

– un agencement d'antennes, lequel comporte une antenne centrale, ainsi que plusieurs antennes omnidirectionnelles (1), lesquelles sont équidistantes et disposées selon un cercle (12) autour de l'antenne centrale,

– un dispositif de commutation d'antennes (13), par lequel les groupes d'antennes se suivant les uns les autres le long de la circonférence et formés chacun d'une antenne omnidirectionnelle et ou moins d'une des antennes omnidirectionnelles qui en sont voisines, en même temps que des groupes d'antennes correspondants leur faisant face selon un diamètre du cercle, sont couplés les uns après les autres à l'émetteur, de sorte qu'est simulée une rotation continue de deux antennes omnidirectionnelles opposées autour de l'antenne centrale,

– un diviseur de puissance réciproque pour chacune des antennes omnidirectionnelles, chacun d'eux possédant une première sortie (A1) connectée au dispositif de commutation d'antennes (13), une deuxième sortie (A3) couplée à la première sortie et connectée à l'antenne omnidirectionnelle associée, ainsi que deux autres sorties (A2, A4), couplées, non seulement à la première sortie, mais aussi à la deuxième sortie du diviseur de puissance considéré, par un circuit de couplage (R1, L2, C2; R2, L3, C3) compris dans ce dernier et fournissant des coefficients de couplage prédéterminés, et chacun de ceux-ci étant couplé, par une ligne HF respective (16, 35), à l'une des deux autres sorties correspondantes respectives d'un diviseur de puissance d'une autre antenne omnidirectionnelle respective, caractérisée en ce que,

– les deux autres sorties (A2, A4) de chacun des diviseurs de puissance sont couplées chacune à l'une des-dites deux autres sorties de deux des diviseurs de puissance, lesquels sont respectivement affectés aux antennes omnidirectionnelles situées immédiatement après la suivante, de chacun des deux côtés de l'antenne omnidirectionnelle du diviseur de puissance considéré, et

– le circuit de couplage du diviseur de puissance est dimensionné et la longueur de la ligne HF couplant l'un à l'autre les diviseurs de puissance est sélectionnée de telle sorte que chaque antenne omnidirectionnelle d'un groupe d'antennes, commutée sur l'émetteur, de même que les deux antennes omnidirectionnelles disposées des deux côtés de cette antenne omnidirectionnelle, produit en diagramme de rayonnement de forme approximativement elliptique, la superposition de tous les diagrammes de rayonnement d'un groupe d'antennes résultant, à l'emplacement d'un utilisateur (6), en un diagramme sensiblement circulaire, indépendamment de la direction de celui-ci par rapport à l'agencement d'antennes.

Fig.1

Fig.3

0 122 418

Fig.2

ANTENNENSCHALTGERÄT

SENDER